Europäisches Patentamt

European Patent Office

Office européen des brevets

(11) Numéro de publication: **0 275 782**
B1

# FASCICULE DE BREVET EUROPEEN

(45) Date de publication du fascicule du brevet:
05.09.90

(51) Int. Cl.⁵: **G01V 1/053**, G01V 1/147

(21) Numéro de dépôt: 87402965.5

(22) Date de dépôt: 22.12.87

(54) **Dispositif perfectionné pour engendrer dans le sol à la fois des ondes acoustiques transversales et longitudinales suivant une pluralité de directions différentes.**

(30) Priorité: 23.12.86 FR 8618031

(43) Date de publication de la demande:
27.07.88 Bulletin 88/30

(45) Mention de la délivrance du brevet:
05.09.90 Bulletin 90/36

(84) Etats contractants désignés:
DE GB IT NL

(56) Documents cités:
EP-A- 0 101 331
EP-A- 0 230 372
FR-A- 2 276 599
US-A- 4 390 077

(73) Titulaire: INSTITUT FRANCAIS DU PETROLE, 4, Avenue de Bois-Préau, F-92506 Rueil-Malmaison Cédex(FR)

(72) Inventeur: Cholet, Jacques, 32 bis, route de Saint Nom, F-78620 L'Etang-La-Ville(FR)
Inventeur: Layotte, Pierre-Claude, 2, chemin des Pivoines, F-17570 Les Mathes(FR)

## Description

L'invention a pour objet un dispositif perfectionné pour engendrer dans le sol à la fois des ondes acoustiques transversales et longitudinales suivant une pluralité de directions différentes, utilisable en particulier dans le domaine de la prospection sismique.

En prospection sismique, la détermination de l'emplacement des couches réfléchissantes du sous-sol est souvent effectuée en transmettant dans le sol des ondes acoustiques longitudinales (P) qui se propagent suivant un mode de compression. Mais on utilise aussi des ondes transversales (S) qui se propagent suivant un mode de distorsion ou de cisaillement. Les ondes transversales permettent des applications intéressantes. Leur longueur d'onde étant, à fréquence égale, inférieure à celle des ondes longitudinales, elles possèdent un meilleur pouvoir séparateur. En outre, comme il est bien connu des spécialistes, la comparaison d'enregistrements obtenus avec des ondes transversales ayant des directions de polarisation différentes permet de détecter des fractures orientées dans le sous-sol et donc des possibilités nouvelles d'interprétation.

Un dispositif connu, adapté à engendrer dans le sol des ondes acoustiques transversales, est décrit dans le brevet français n° 2.276.599 par exemple. Il comporte essentiellement un élément-cible pourvu d'une surface d'application sur le sol et d'au moins une surface latérale de frappe perpendiculaire à la surface d'application, une masse pour frapper l'élément-cible, un bras pivotant par rapport à une plateforme pour supporter la masse et des moyens de manoeuvre pour faire pivoter le bras par rapport à la plateforme entre une position basse où la masse vient en contact de la surface latérale de frappe et une position haute.

Des moyens de levage fixés à un véhicule permettent de déplacer l'élément-cible entre une position de transport et une position basse où la surface d'application est en contact avec le sol. L'élément-cible étant déposé sur le sol, la masse, préalablement élevée par pivotement du bras, est libérée et vient frapper la surface latérale de l'élément-cible suivant une direction sensiblement parallèle à la surface du sol. Sous le choc, des ondes acoustiques transversales sont transmises dans le sol.

Dans le brevet français n° 2.530.344 correspondant à EP-A 0 101 331 est décrit un perfectionnement au dispositif précédent où l'élément-cible, la plateforme supportant l'axe du bras pivotant et les moyens de manoeuvre sont reliés à une cage rigide associée à des moyens de guidage solidaires du châssis d'un véhicule et déplaçable en translation par rapport à celui-ci entre une première position de travail où l'élément-cible est en contact avec le sol et une seconde position de relevage. Des moyens moteurs permettent de déplacer la cage rigide par rapport au châssis entre la première et la seconde position et pour presser l'élément-cible contre le sol en position de travail.

La cage rigide comporte, par exemple, des colonnes adaptées à coulisser verticalement par rapport au châssis du véhicule, ces colonnes étant rendues solidaires les unes des autres par une première structure rigide supportant la plateforme et les moyens de manoeuvre et une seconde structure rigide reliée à l'élément-cible par des moyens de couplage déformables.

L'élément-cible, le bras associé à la masse et les moyens de manoeuvre du bras étant reliés à une cage rigide déplaçable entre une position où l'élément-cible est bien pressé contre le sol (cette force d'ancrage étant par exemple au moins une partie du poids du véhicule) et une position de relevage permettant les déplacements du véhicule, l'intervalle de temps séparant deux déclenchements successifs à deux emplacements différents est de ce fait considérablement réduit.

En outre, les faces de frappe sont des faces intérieures de l'élément-cible et le bras pivotant, la plateforme et les moyens de manoeuvre sont agencés pour que les déplacements de la masse soient circonscrits dans un volume délimité par la cage et le châssis du véhicule. Cet agencement permet de limiter la dimension latérale de la zone de travail et d'empêcher l'accès du personnel à l'intérieur de la zone d'évolution de la masse pendant le fonctionnement du dispositif.

Un tel dispositif est adapté à la création d'ondes transversales pures et se prête mal aux applications où l'on effectue des enregistrements sismiques en ondes P et S.

On connait aussi par le brevet US n° 4.291.780 et 4.390.077 notamment un dispositif pour appliquer au sol des impulsions suivant une direction oblique de manière à engendrer à la fois des ondes longitudinales et transversales.

Ces impulsions sont engendrées par percussion d'une masse chutant d'un mouvement rectiligne vers une face d'impact inclinée par rapport à la verticale, d'un élément-cible couplé avec le sol ou vers une autre face diamétralement opposée. La masse est dirigée dans sa chute par les montants parallèles d'un mât de guidage orientable par rapport à l'élément-cible. La vitesse d'impact de la masse est maximale lorsque le mât est vertical c'est-à-dire pour la production d'ondes de compression et diminue lorsqu'on l'incline. Les forces de frottement de la masse contre le mât de guidage augmentent avec l'inclinaison, il devient plus difficile de prévoir la durée de chute et donc l'instant précis de l'impact. Or, pour de nombreuses applications, l'angle d'inclinaison du mât de guidage nécessaire pour obtenir un rapport d'amplitude convenable entre les ondes S et P, doit atteindre des valeurs importantes. Cette condition de fonctionnement est peu favorable à une bonne synchronisation.

Le dispositif selon la présente invention est adapté à engendrer dans le sol des ondes acoustiques du type P et du type S par impact d'une masse sur un élément-cible suivant des directions de forte obliquité par rapport à la verticale.

Il comporte un élément-cible pourvu d'une face d'application sur le sol et d'une paroi intérieure de frappe, une masse pour frapper l'élément-cible sur ladite paroi intérieure, un bras pivotant par rapport à une tourelle pour supporter la masse et des moyens de manoeuvre pour faire pivoter le bras par rapport à la plateforme entre une position basse et une position haute où la masse vient en contact de la paroi intérieure de frappe. L'élément-cible, la tourelle et les moyens de manoeuvre sont reliés à une cage rigide associée à des moyens de guidage solidaires du châssis d'un véhicule et déplaçable en translation par rapport à celui-ci entre une première position de travail où l'élément-cible est en contact avec le sol et une seconde position de relevage, le dispositif comportant des moyens moteurs pour déplacer la cage rigide par rapport au châssis entre la première et la seconde positions et pour presser l'élément-cible contre le sol en position de travail.

Il est caractérisé en ce que la paroi intérieure de frappe est inclinée par rapport à la verticale et comporte une pluralité de faces inclinées orientées différemment les unes des autres, le dispositif comportant également des moyens de rotation pour faire tourner la plateforme par rapport à l'élément-cible, et amener le plan de pivotement du bras perpendiculairement à chacune desdites faces intérieures inclinées, l'axe de pivotement du bras étant positionné pour que la masse en position basse vienne frapper perpendiculairement ladite paroi intérieure.

L'élément-cible peut comporter avantageusement un évidement intérieur ayant la forme d'un tronc de cône et adapté à recevoir des impacts de la masse en n'importe quel emplacement de son pourtour intérieur.

En chaque emplacement choisi d'un profil sismique, on émet à la fois des ondes P et S. Le plan de polarisation des ondes peut être changé rapidement en amenant le bras pivotant, par rotation de la plateforme, dans un plan perpendiculaire à une autre des faces de frappe oblique de l'élément-cible.

L'émission simultanée d'ondes P et S permet un gain de temps appréciable et donc une diminution importante du coût d'une campagne d'exploration le long d'un profil. La masse chutant par pivotement d'un bras de support percute l'élément-cible avec une très grande force sous un angle d'incidence élevé, avec une très faible dissipation d'énergie par frottement. Ceci permet d'obtenir des ondes S d'amplitude plus élevée que celle des ondes P simultanément émises, ce qui est très favorable pour de nombreuses applications. Les frottements étant faibles, on n'observe aucun retard imprévisible dans la chute de la masse. L'instant d'impact peut donc être déterminé avec précision. La synchronisation de plusieurs dispositifs d'émission tels que celui-ci déclenchés simultanément ou en séquence, est beaucoup plus simple de ce fait.

L'utilisation d'un élément-cible dont l'évidement intérieur présente une forme tronconique rend possible l'application dans le sol d'ondes S polarisées suivant n'importe quelle direction souhaitée. L'orientation du plan de polarisation pouvant être fixé avec précision, les manoeuvres sur le site sont grandement facilitées.

D'autre caractéristiques et avantages du dispositif apparaîtront à la lecture de la description d'un mode de réalisation préféré, choisi à titre d'exemple non limitatif, et en se référant aux dessins annexés sur lesquels :

- la figure 1 représente une vue d'ensemble du dispositif associé à un véhicule, la cage rigide supportant l'élément-cible, le bras, la tourelle et les moyens de manoeuvre, se trouvent en position de relevage;
- la figure 2 représente, réduite à sa partie centrale, une vue analogue à la figure 1 où le plan de pivotement du bras est parallèle à l'axe longitudinal du véhicule et où l'élément-cible est en position de travail couplé avec le sol;
- la figure 3 représente une vue transversale en coupe partielle du dispositif où le plan de pivotement du bras est tourné de 90° par rapport aux figures précédentes;
- la figure 4 représente l'élément-cible en vue de dessus avec une demi-coupe montrant la disposition de moyens d'amortissement des chocs;
- la figure 5 représente l'élément-cible de la figure 4, vu de côté en demi-coupe suivant A-B;
- la figure 6 représente schématiquement le bras en position basse, la masse étant en contact d'une face de frappe oblique de l'élément-cible, le vérin hydraulique faisant partie des moyens de manoeuvre du bras étant en position d'extension;
- la figure 7 représente schématiquement le bras en position haute, le même vérin hydraulique étant en position de retrait; et
- la figure 8 représente schématiquement le bras associé aux moyens de manoeuvre, en position intermédiaire au cours de la chute de la masse vers une face de frappe oblique de l'élément-cible.

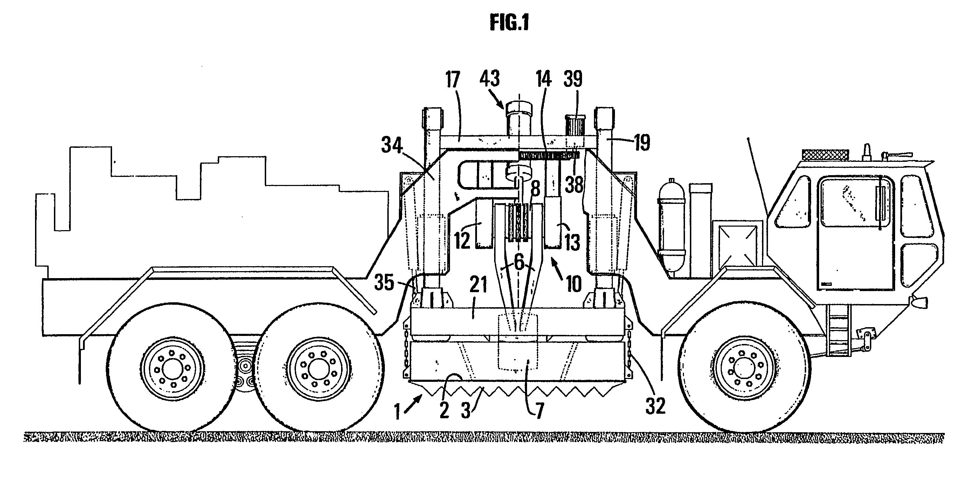

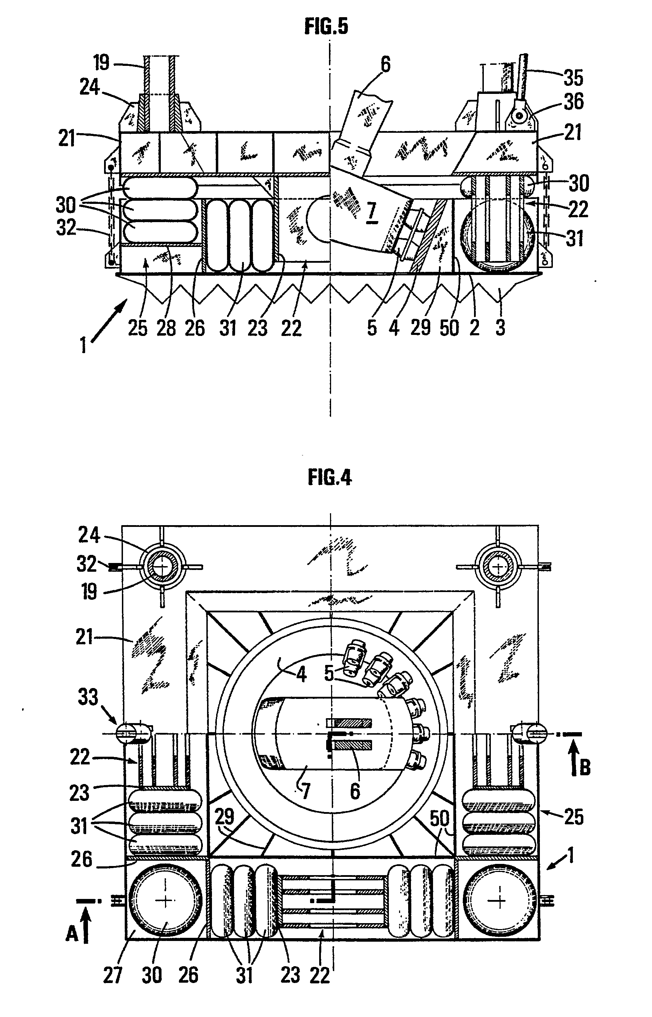

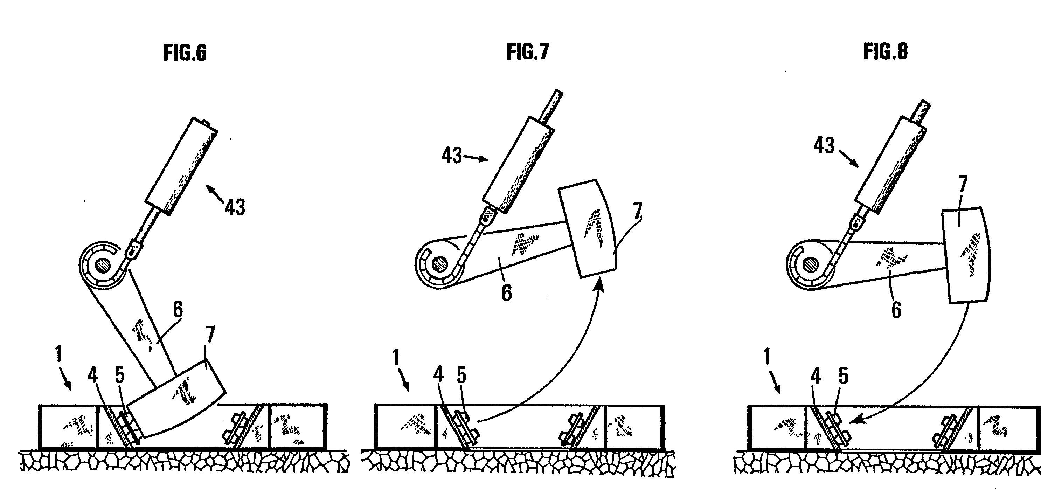

Le dispositif représenté aux figures 1 à 5 comporte un élément-cible 1 de forme carrée ou rectangulaire, évidé dans sa partie centrale et constitué d'un assemblage rigide de plaques et de poutres métalliques qui sera décrit de façon détaillée en relation avec les figures 4, 5 notamment. L'élément-cible est pourvu d'une face 2 d'application sur le sol. Des éléments de couplage 3 constitués de pointes ou saillants peuvent être facultativement fixés à la paroi d'application, de manière à accroître le coefficient de couplage de l'élément-cible avec le sol.

L'élément-cible comporte au moins une paroi intérieure 4 inclinée par rapport à la verticale. L'angle d'inclinaison est choisi en fonction de l'amplitude relative des ondes P et S que l'on veut obtenir. On lui donne par exemple une valeur de l'ordre de 20° à 30°.

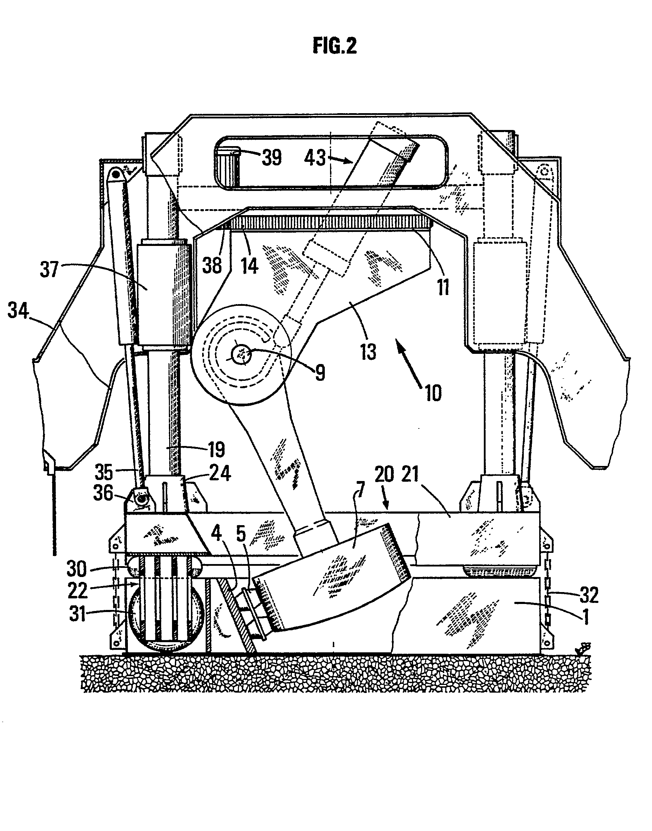

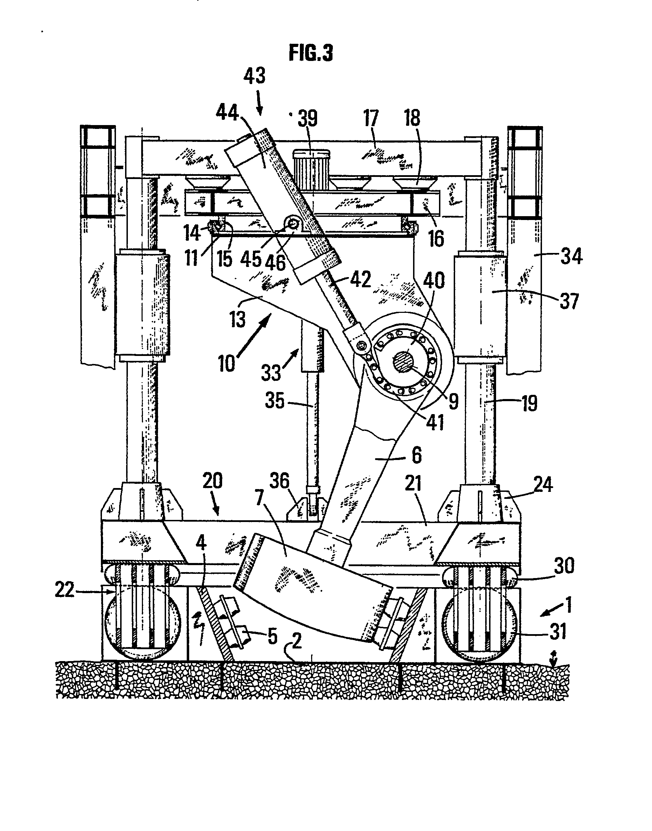

Des éléments amortisseurs 5 (fig. 2, 3) sont fixés contre la paroi intérieure 4.

Le dispositif comporte également un bras 6 constitué de deux éléments allongés écartés l'un de l'autre (fig. 1). Le bras 6 peut être rigide ou présenter une certaine flexibilité. Une première extrémité de chacun des éléments du bras 6 est fixée à une masse 7. Les extrémités opposées de ces mêmes éléments sont réunies par une partie cylindrique 8 (fig. 1). Un axe 9 solidaire du bras 6 traverse de part en part les deux éléments de celui-ci et la partie cylindrique 8.

Le dispositif comporte aussi une tourelle 10 constituée d'une plaque 11 pourvue d'un rebord annulaire et de deux éléments de support ou flasques 12, 13 (fig. 1) perpendiculaires à la plaque 11 et solidaires de celle-ci. Au voisinage de leur extrémité opposée à la plaque 11, les deux flasques 12, 13 comportent chacun un palier pour l'axe de rotation 9 du bras.

On interpose de préférence des disques (non représentés) en polyuréthane par exemple, entre l'axe 9 et les flasques, pour amortir les secousses transmises à la tourelle au moment des impacts.

Autour du rebord de la plaque 11 et fixée à celle-ci, est disposée une couronne dentée 14 (fig. 3). Le rebord de la plaque 11 peut tourner, par l'intermédiaire de roulements à billes ou à rouleaux (non représentés), par rapport à une couronne 15 (fig. 3). Celle-ci est fixée sous un élément de support 16. Une structure de support 17 constituée par assemblage de poutrelles, est disposée au-dessus de l'élément de support 16 et reliée à lui par des plots 18 réalisés en un matériau amortisseur.

Quatre colonnes 19 relient la première structure de support 17 à une seconde structure de support 20 de forme carrée ou rectangulaire, elle-même reliée à l'élément-cible 1 par des moyens d'amortissement de manière indiquée ci-après.

La seconde structure de support 20 est constituée d'un cadre rigide réalisé par assemblage de quatre poutres rigides 21 (fig. 5) réunies en carré ou en rectangle. Sous chacune des quatre poutres 21, vers le milieu de leur longueur, sont soudées des entretoises nervurées 22 (fig. 4) pourvues de faces latérales 23. Aux quatre coins du cadre rigide sont fixées des pièces de raccordement 24 où s'emboitent les pieds des quatres colonnes 19.

L'élément-cible 1 est réalisé sous la forme d'un caisson rectangulaire fixé à une plaque de base constituant la face d'appui 2 contre le sol. Le caisson comporte (fig. 4) quatre côtés 25 dont la section transversale est en forme de U. Aux quatre coins du caisson, des cloisons de rigidification 26 perpendiculaires à la plaque de base 2, délimitent quatre compartiments 27. Une autre cloison 28 (fig 5) est fixée dans ces compartiments, parallèlement à la plaque de base.

Dans la partie centrale évidée du caisson est fixée une paroi tronconique s'évasant vers le haut. Cette paroi constitue la paroi intérieure 4 déjà mentionnée. Des nervures 29 sont disposées radialement tout autour de la paroi tronconique 4 et sont fixées à celle-ci, à la plaque de base 2 et aux parois intérieures 50 des quatres côtés du caisson. Les éléments amortisseurs 5 sont fixés contre cette paroi tronconique.

Des moyens amortisseurs sont disposés entre la seconde structure de support 20 et le caisson de l'élément-cible. Ces moyens comportent :
- des enceintes déformables 30 (fig. 5) disposées dans les compartiments 27 entre les cloisons horizontales 28 et la seconde structure de support 20; et
- des enceintes déformables 31 disposées dans les quatre côtés 25 en forme de U du caisson entre les parois 23 des entretoises 22 (fixées sous la seconde structure de support) et respectivement les deux cloisons de rigidification 26 opposées de chaque côté 25 dudit caisson.

Cette disposition symétrique des enceintes déformables 30, 31 sur chaque côté du caisson permet d'amortir les ébranlements transmis à la seconde structure de support et donc à toute la cage par l'élément-cible, quelle que soit la direction d'application des impacts de la masse.

La seconde structure de support 20 repose sur le caisson par l'intermédiaire des enceintes déformables 30. Des chaînes 32 les relient l'un à l'autre et permettent à l'élément-cible 1 de suivre tous les déplacements verticaux appliqués à la cage.

Les moyens de déplacement vertical de la cage comportent deux vérins 33 dont les corps sont fixés au châssis 34 d'un véhicule et dont les tiges 35 sont reliées par des pattes de fixation 36 solidaires de la seconde structure de support 20 et disposées sensiblement dans le plan longitudinal médian du dispositif.

Un système hydraulique porté par le véhicule (et non représenté) permet d'alimenter les deux vérins 33 en liquide sous pression.

Quatre manchons 37 associés au châssis 34 assurent le guidage vertical des quatre colonnes 19 lorsque les vérins sont actionnés.

Le dispositif comporte, en outre, une roue dentée 38 (fig. 1, 2) adaptée à s'engrener sur la couronne dentée 14 et entraînée en rotation par une moteur 39 fixé à la première structure de support 17 de la cage.

Les moyens de manoeuvre du bras 6 comportent :
- trois roues dentées 40 (fig. 1) solidaires de la partie cylindrique 8,
- trois chaînes 41 s'engrenant sur les trois roues dentées 40 et raccordées à l'une de leurs extrémités à la tige 42 d'un vérin 43 dont le corps 44 est fixé à un axe 45. La plaque 11 de la tourelle 10 et pourvue d'une ouverture pour le passage du corps 44 du vérin et de deux paliers 46 adaptés à supporter l'axe 45 fixé au vérin.

Les dimensions de la tourelle 10 et la longueur du bras 6 sont adaptées aux dimensions de la cage et à celles de l'élément-cible, de manière que la masse vienne en position basse frapper la paroi inclinée 4 de l'élément-cible perpendiculairement à celle-ci, quelle que soit l'orientation de la tourelle relativement à la cage. Ceci permet de choisir à volonté et sans limitation le plan de pivotement du bras et donc la direction selon laquelle les impacts seront appliqués au sol.

En faisant varier la course du vérin 43 ou la longueur des chaînes 41, on peut modifier la hauteur de chute et donc la force de l'impact.

Le dispositif fonctionne de la manière suivante :
- le véhicule ayant été amené à un emplacement choisi pour y effectuer des "tirs" sismiques, et l'élément-cible 1 étant en position haute (fig. 1), on actionne les deux vérins 35 pour faire descendre la cage rigide de sa position haute (seconde position) à sa position basse (première position) où l'élément-cible 1 vient s'appliquer contre la surface du sol. De préférence, on applique aux deux vérins une pression hydraulique suffisante pour qu'une partie au moins du véhicule vienne peser sur l'élément-cible en position de travail, de manière à obtenir un bon couplage acoustique,
- on actionne le moteur 39 de manière à faire tourner la tourelle 10 et amener le plan de pivotement du bras dans une position déterminée (fig 2 ou 6, par exemple). Le bras 6 étant en position basse, la masse 7 est en contact des éléments amortisseurs 5 de la paroi de frappe inclinée 4 de l'élément-cible. La tige 42 du vérin de manoeuvre 43 se trouve dans sa position d'extension.

- on actionne ensuite le vérin 43 de manière à rétracter la tige 42. La traction est transmise par les chaînes 41 et le bras 6 pivote jusqu'à sa position haute (fig. 7).

- au moment choisi pour le déclenchement, on relâche le vérin 43 et la masse 7 libérée vient frapper obliquement la paroi d'impact 4 (fig. 8), ce qui engendre dans le sol à la fois des ondes longitudinales et transversales.

Les différents éléments de couplage déformables, qu'il s'agisse des différentes enceintes déformables 30, 31 ou des plots amortisseurs 18 amortissent considérablement les chocs transmis à la cage et au châssis du véhicule.

Pour supprimer complètement la force de retenue du vérin 43 qui est très faible en comparaison de la force de pesanteur de la masse, on peut utiliser par exemple un vérin tel que celui décrit dans le brevet français précité 2.530.244.

Un impact ayant été appliqué suivant un certain plan (le plan longitudinal par exemple, comme le montre la figure 2) on peut faire tourner la tourelle 10 de 90° pour l'amener dans un plan transversal (fig. 1 ou 3) ou encore de 180° pour obtenir des ondes secondaires de polarité opposée. Ceci n'est pas limitatif. On peut aussi amener le plan de pivotement du bras 6 dans toute autre direction souhaitée pour les besoins de la prospection sismique du fait de la forme tronconique de la paroi intérieure d'impact. On répète alors la séquence précédente.

Les opérations de "tir" et d'acquisition des données sismiques étant effectuées à un emplacement déterminé, on actionne les moyens moteurs (vérins 33) pour amener la cage en position de relevage (fig. 1) et l'on déplace le véhicule jusqu'à une nouvelle position choisie.

Suivant le mode de réalisation préféré, on donne à la paroi intérieure de l'élément-cible une forme tronconique permettant de choisir sans limitation le plan de polarisation des ondes émises. On ne sortirait pas cependant du cadre de l'invention en utilisant un élément-cible aux possibilités plus limitées. La paroi intérieure peut comporter par exemple une face de frappe unique, deux faces de frappe symétriquement disposées ou quatre faces de frappe sur les quatre côtés 25 intérieurs du caisson. Plus généralement on peut donner à la paroi intérieure du caisson une forme de pyramide à base polygonale à n côtés offrant donc n faces de frappe différentes.

On ne sortirait pas non plus du cadre de l'invention en utilisant une tourelle 10 déplaçable verticalement par rapport à la cage, un bras plus ou moins extensible et une élément-cible présentant des faces de frappe obliques diversement inclinées, de manière à faire varier l'obliquité des directions d'impact.

## Revendications

**1.** - Dispositif perfectionné pour engendrer dans le sol des ondes acoustiques transversales comportant un élément-cible (1) pourvu d'un face d'application (2) sur le sol et d'une paroi intérieure, une masse (7) pour frapper l'élément-cible sur ladite paroi intérieure, un bras (6) pivotant par rapport à une tourelle (10) pour supporter la masse et des moyens de manoeuvre pour faire pivoter le bras (6) par rapport à la tourelle entre une position basse où la masse (7) vient en contact de ladite paroi intérieure de frappe et une position haute, l'élément-cible, la tourelle et les moyens de manoeuvre étant reliés à une cage rigide associée à des moyens de guidage (35) solidaires du châssis (34) d'un véhicule et déplaçable en translation par rapport à celui-ci entre une première position de travail où l'élément-cible est en contact avec le sol et une seconde position de relevage, le dispositif comportant des moyens moteurs (33) pour déplacer la cage rigide par rapport au châssis entre la première et la seconde position et pour presser l'élément-cible contre le sol en position de travail, caractérisé en ce que la paroi intérieure de frappe (4, 5) est inclinée par rapport à la verticale et comporte une pluralité de faces inclinées, orientées différemment les unes des autres, le dispositif comportant également des moyens de rotation (14, 38, 39) pour faire tourner la tourelle (10) par rapport à l'élément-cible et amener le plan de pivotement du bras (6) perpendiculairement à chacune desdites faces intérieures inclinées, l'axe de pivotement (12) du bras (6) étant positionné pour que la masse (7) en position basse, vienne frapper perpendiculairement ladite paroi intérieure.

**2.** - Dispositif selon la revendication 1, caractérisé en ce que le nombre de faces intérieures est infini, l'élément-cible comportant une paroi intérieure ayant la forme d'un tronc de cône qui est adaptée à recevoir des impacts de la masse en n'importe quel emplacement de son pourtour intérieur.

**3.** - Dispositif selon la revendication 1 ou 2, caractérisé en ce que la cage rigide comporte des colonnes (19) adaptées à coulisser verticalement par rapport au châssis (34) du véhicule, ces colonnes étant rendues solidaires les unes des autres par une première structure rigide (17) supportant la tourelle (10) et les moyens de manoeuvre, et par une seconde structure rigide (20) reliée à l'élément-cible (1) par des moyens de couplage déformables.

**4.** - Dispositif selon la revendication 3, caractérisé en ce que les moyens de couplage déformables comportent des éléments élastiques (30, 31) interposés entre la seconde structure rigide et l'élément-cible pour amortir les chocs horizontaux et verticaux transmis par celui-ci.

**5.** - Dispositif selon la revendication 3, caractérisé en ce que l'élément-cible est réalisé sous la forme d'un caisson à quatre côtés (25), chacun des côtés comportant des cloisons intérieures (26, 28), la seconde structure rigide comporte des entretoises nervurées (22) pénétrant à l'intérieur des côtés du caisson et les moyens de couplage déformables comportent des premiers éléments élastiques (30) disposés à l'intérieur des côtés du caisson de manière que la seconde structure rigide repose sur lesdits premiers éléments élastiques lorsque l'élément-cible est en position de travail et des secondes éléments élastiques (31) disposés également à l'intérieur des côtés du caisson entre les cloisons (26) de celui-ci et les entretoises (22) solidaires de la seconde structure rigide de manière à amortir toutes les composantes parallèles à la face d'application (2) transmises à la cage par l'élément-cible.

6. - Dispositif selon la revendication 5, caractérisé en ce que la paroi intérieure (4) est rendue solidaire du caisson par des nervures (29) fixées à la plaque de base et aux côtés de celui-ci.

7. - Dispositif selon la revendication 3, caractérisé en ce que la cage comporte quatre colonnes (22) fixées à quatre emplacements différents de la seconde structure (20), des moyens de couplage déformables (30) étant interposés entre l'élément-cible (1) et la seconde structure au voisinage de ces emplacements.

8. - Dispositif selon la revendication 3, caractérisé en ce que les moyens moteurs comportent deux vérins (33) assujettis au châssis (34) du véhicule, dont les tiges (35) sont reliées à la seconde structure (20) de la cage rigide, ces deux vérins étant alimentés par un système hydraulique.

9. - Dispositif selon la revendication 4, caractérisé en ce que les éléments élastiques comportent des enveloppes en matériau déformable remplies d'air comprimé.

10. - Dispositif selon la revendication 1, caractérisé en ce que les moyens de rotation pour faire tourner la tourelle (10) comportent une couronne dentée (14) fixée à la tourelle (10), laquelle comprend une plaque (11), des éléments de support (12, 13) solidaires de la plaque, l'axe de pivotement (9) du bras (6) étant fixé auxdits éléments de support.

11. - Dispositif selon la revendication 1, caractérisé en ce qu'au moins un élément amortisseur de choc (5) est fixé contre la paroi intérieure (4) de l'élément-cible (1).

12. - Dispositif selon la revendication 3, caractérisé en ce que les moyens de couplage déformables comportent des soufflets remplis d'air comprimé dont la paroi latérale est déformable.

**Patentansprüche**

1. Vorrichtung zur Erzeugung akustischer Transversalwellen im Erdboden mit einem Targetelement (1), das mit einer Bodenanlagefläche (2) und einer Innenwandung versehen ist, einer Masse (7), die das Targetelement auf diese Innenwandung schlagen läßt, einem Arm (6), der bezüglich eines Rotationskopfs (10) zum Abstützen der Masse verschwenkbar ist und mit Betätigungseinrichtungen, um den Arm (6) bezüglich des Drehkopfes zwischen einer unteren Stellung, wo die Masse (7) in Kontakt mit dieser Schlaginnenwand kommt und einer oberen Stellung verschwenken zu lassen, wobei Targetelement, Rotationskopf und Betätigungseinrichtungen mit einem steifen Käfig verbunden sind, der Führungseinrichtungen (35) zugeordnet ist, die fest mit dem Chassis (34) eines Fahrzeugs sind und der translatorisch bezüglich dieses zwischen einer ersten Arbeitsstellung, wo das Targetelement in Kontakt mit dem Erdboden kommt und einer zweiten Hubstellung bewegbar ist, wobei die Vorrichtung Antriebsmittel (33) aufweist, um den steifen Käfig.

bezogen auf das Chassis, zwischen der ersten Stellung und der zweiten Stellung zu bewegen und das Targetelement gegen den Erdboden in Arbeitsstellung zu pressen, dadurch gekennzeichnet, daß die Schlaginnenwandung (4, 5) geneigt bezüglich der Vertikalen ist und eine Vielzahl von geneigten Flächen umfaßt, die unterschiedlich bezüglich einander geneigt sind. daß die Vorrichtung auch Rotationsmittel (14, 38, 39) aufweist, um den Dreh- oder Rotationskopf (10) bezüglich des Targetelements in Drehung zu versetzen und die Schwenkebene des Arms (6) senkrecht zu jeder dieser geneigten Innenflächen zu führen und daß die Schwenkachse (12) des Arms (6) derart positioniert ist, daß die Masse (7) in unterer Stellung senkrecht auf diese Innenwandung schlägt.

2. Vorrichtung nach Anspruch 1, dadurch gekennzeichnet, daß die Anzahl der Innenflächen unendlich ist, das Targetelement eine Innenwandung von der Gestalt eines Kegelstumpfs hat, der so ausgelegt ist, daß er Schläge der Masse an beliebigem Ort seines Innenumfangs aufnehmen kann.

3. Vorrichtung nach Anspruch 1 oder 2, dadurch gekennzeichnet, daß der steife Käfig Säulen (19) umfaßt, die so ausgelegt sind, daß sie vertikal, bezogen auf das Chassis (34) des Fahrzeugs, gleiten, wobei diese Säulen fest bezüglich einander durch eine steife den Rotationskopf (10) sowie Betätigungseinrichtungen tragende Konstruktion (17) gemacht sind und durch eine zweite steife Konstruktion (20), die mit dem Targetelement (1) über verformbare Kopplungseinrichtungen verbunden ist, festgemacht sind.

4. Vorrichtung nach Anspruch 3, dadurch gekennzeichnet, daß die verformbaren Kopplungseinrichtungen elastische Elemente (30, 31) umfassen, die zwischen die zweite steife Konstruktion und das Targetelement geschaltet sind, um die von diesem übertragenen horizontalen und vertikalen Stöße zu dämpfen.

5. Vorrichtung nach Anspruch 3, dadurch gekennzeichnet, daß das Targetelement in Form eines Kastens mit vier Seiten (25) ausgeführt ist, wobei jede der Seiten Innentrennwände (26, 28) umfaßt und die steife Konstruktion Rippenzwischenwände (22) aufweist, die in das Innere der Kastenseiten eindringt und die verformbaren Kopplungsmittel erste elastische Elemente (30) umfassen, die im Inneren der Seiten des Kastens derart angeordnet sind, daß die zweite steife Konstruktion auf diesen ersten elastischen Elementen ruht, wenn das Targetelement sich in Arbeitsstellung befindet und zweite elastische Elemente (31) ebenfalls im Inneren der Seiten des Kastens zwischen seinen Trennwänden (26) und den Zwischenstücken (22) angeordnet sind, welche fest mit der zweiten steifen Konstruktion derart sind, daß sämtliche Komponenten parallel zur Anlagefläche (2) gedämpft werden, welche vom Targetelement auf den Käfig übertragen werden.

6. Vorrichtung nach Anspruch 5, dadurch gekennzeichnet, daß die Innenwandung (4) fest mit dem Kasten über Rippen (29) verbunden ist, die an der Basisplatte und den Seiten hiervon befestigt sind.

7. Vorrichtung nach Anspruch 3, dadurch gekennzeichnet, daß der Käfig vier Säulen (22) umfaßt, die an vier unterschiedlichen Orten der zweiten Konstruktion (20) befestigt sind, wobei verformbare Kopplungseinrichtungen (30) zwischen das Targetelement (1) und die zweite Konstruktion benachbart dieser Orte eingeschaltet sind.

8. Vorrichtung nach Anspruch 3, dadurch gekennzeichnet, daß die Antriebseinrichtungen zwei am Chassis (34) des Kraftfahrzeugs befestigte Stellzylinder (33) umfassen, deren Stangen (35) mit der zweiten Konstruktion (20) des steifen Käfigs verbunden sind, wobei diese beiden Stellzylinder über ein hydraulisches System gespeist sind.

9. Vorrichtung nach Anspruch 4, dadurch gekennzeichnet, daß die elastischen Elemente Hüllausbildungen aus verformbarem mit Luft gefülltem Material umfassen.

10. Vorrichtung nach Anspruch 1, dadurch gekennzeichnet, daß die Rotationseinrichtungen, die die Drehung des Rotationskopfes (10) veranlassen, einen am Rotationskopf (10) befestigten Zahnkranz (14) umfassen, der eine Platte (11) sowie fest mit der Platte verbundene Stützelemente (12, 13) umfaßt, wobei die Schwenkachse (9) des Arms (6) an diesen Stützelementen befestigt ist.

11. Vorrichtung nach Anspruch 1, dadurch gekennzeichnet, daß wenigstens ein stoßdämpfendes Element (5) gegen die Innenwandung (4) des Targetelements (1) befestigt ist.

12. Vorrichtung nach Anspruch 3, dadurch gekennzeichnet, daß die verformbaren Kopplungseinrichtungen mit Druckluft gefüllte Balken umfassen, deren Seitenwandung verformbar ist.

## Claims

1. Improved device for generating transverse sound waves in the ground comprising a target element (1) provided with a face (2) for applying to the ground and with an internal wall, a sledgehammer (7) for striking the target element against the said internal wall, an arm (6) pivoting with respect to a turret (10) for supporting the sledgehammer and means of actuation to make the arm (6) pivot with respect to the turret between a low position in which the sledgehammer (7) comes into contact with the said internal striking wall and a high position, the target element, the turret and means of actuation being connected to a rigid cage joined to means of guiding (35) attached to the chassis (34) of a vehicle and moving in translation with respect to the latter between a first operating position in which the target element is in contact with the ground and a second raised position, the device comprising driving means (33) for moving the rigid cage with respect to the chassis between the first and second position and for pressing the target element against the ground in its operating position, characterised in that the internal striking wall (4, 5) is inclined at an angle with respect to the vertical and comprises a plurality of inclined faces, oriented differently from each other, the device also comprising means of rotation (14, 38, 39) for rotating the turret (10) with respect to the target element and bringing the pivoting plane of the arm (6) perpendicular to each of the said inclined internal faces, the swivel pin (12) of the arm (6) being positioned so that the sledgehammer (7) in its low position strikes the said internal wall perpendicularly.

2. Device as claimed in claim 1, characterised in that the number of internal faces is infinite, the target element comprising an internal wall having the form of a truncated cone which is suitable for receiving impacts of the sledgehammer in any position on its internal circumference.

3. Device as claimed in claim 1 or 2, characterised in that the rigid cage comprises pillars (19) suitable for sliding vertically with respect to the chassis (34) of the vehicle, the said pillars being attached to each other by a first rigid structure (17) supporting the turret (10) and the means of actuation, and by a second rigid structure (20) connected to the target element (1) by flexible means of coupling.

4. Device as claimed in claim 3, characterised in that the flexible means of coupling comprise elastic elements (30, 31) interposed between the second rigid structure and the target element to dampen the horizontal and vertical shocks transmitted by the latter.

5. Device as claimed in claim 3, characterised in that the target element is produced in the form of a four-sided box (25), each of the sides comprising internal partitions (26, 28), the second rigid structure comprises ribbed struts (22) entering inside the sides of the box and the flexible means of coupling comprise first elastic elements (30) disposed inside the sides of the box in such a way that the second rigid structure rests on the said first elastic elements when the target element is in its operating position and second elastic elements (31) also disposed inside the sides of the box between the partitions (26) of the latter and the struts (22) attached to the second rigid structure so as to dampen all the components parallel to the application face (2) transmitted to the cage by the target element.

6. Device as claimed in claim 5, characterised in that the internal wall (4) is attached to the box by ribs (29) fixed to the base plate and to the sides of the box.

7. Device as claimed in claim 3, characterised in that the cage comprises four pillars (22) fixed in four different positions on the second structure (20), flexible means of coupling (30) being interposed between the target element (1) and the second structure close to the said positions.

8. Device as claimed in claim 3, characterised in that the driving means comprise two actuators (33) secured to the chassis (34) of the vehicle, the stems (35) of which are connected to the second structure (20) on the rigid cage, the said two actuators being fed by a hydraulic system.

9. Device as claimed in claim 4, characterised in that the elastic elements comprise jackets of flexible material filled with compressed air.

10. Device as claimed in claim 1, characterised in that the means of rotation for rotating the turret (10) comprise a toothed ring (14) fixed to the turret (10), which comprises a plate (11), supporting elements (12, 13) attached to the plate, the swivel pin (9) of the arm (6) being fixed to the said supporting elements.

11. Device as claimed in claim 1, characterised that at least one shock-absorbing element (5) is secured against the internal wall (4) of the target element (1).

12. Device as claimed in claim 3, characterised in that the flexible means of coupling comprise bellows filled with compressed air, the side wall of which is flexible.

FIG.1

FIG.2

## FIG.3

## FIG.5

## FIG.4

FIG.6

FIG.7

FIG.8